# EUROPEAN PATENT APPLICATION

(11) **EP 4 545 168 A1**
(43) Date of publication of application: **30.04.2025**
(21) Application number: 23825757.0
(22) Date of filing: 18.01.2023
(51) Int. Cl.: B01D 53/04, B01J 20/20, B01J 20/30

(54) **DIRECT AIR CAPTURING METHOD OF CARBON DIOXIDE**

(30) Priority: 22.06.2022 CN 202210710400
(71) Applicant: Huaneng Clean Energy Research Institute, Beijing 102209 (CN); Shanghai Shidongkou No.2 Power Plant Huaneng International Power Co. Ltd, Shanghai 200436 (CN)
(72) Inventor: ZHENG, Zhaofang, Beijing 102209 (CN); GUO, Dongfang, Beijing 102209 (CN); WANG, Huanjun, Beijing 102209 (CN); NIU, Hongwei, Beijing 102209 (CN); LIU, Lianbo, Beijing 102209 (CN); GAO, Shiwang, Beijing 102209 (CN); CHEN, Kaida, Beijing 102209 (CN)
(74) Representative: Petraz, Gilberto Luigi
(86) International application number: PCT/CN2023/072896
(87) International publication number: WO 2023/246097

(57) **Abstract**

The present application provides a direct air capturing method of carbon dioxide, comprising the following steps: (1) an absorption stage: absorbing and capturing carbon dioxide in the air by means of an adsorbent till saturation; (2) a desorption and regeneration stage: in a high-vacuum state, heating the adsorbent to 105-110°C, desorbing and regenerating the adsorbent, and releasing pure carbon dioxide gas; and (3) a cooling stage: cooling the adsorbent to the room temperature by using air, and then performing the next absorption-desorption and regeneration cycle. The adsorbent is prepared by means of a method comprising the following steps: mixing pulverized coal with a potassium carbonate solution, and performing activation treatment to generate a porous carbon material; and mixing the porous carbon material with carbon nanotubes and an ionic liquid, and then performing carbonization treatment to obtain the adsorbent. According to the direct air capturing method of carbon dioxide in the present application, carbon dioxide in the air can be efficiently absorbed, too high regeneration energy consumption is not needed, the cost is low, and the process is simple and easy to operate.

## Description

### CROSS-REFERENCE TO RELATED APPLICATION

This application claims priority to Chinese Patent Application No. 202210710400.6, titled "DIRECT AIR CAPTURING METHOD OF CARBON DIOXIDE", filed with the China National Intellectual Property Administration on June 22, 2022, the entire content of which is incorporated herein by reference.

### FIELD

The present application relates to the technical field of carbon capture, and more particularly to a direct air capture method of carbon dioxide.

### BACKGROUND

At present, a concentration of carbon dioxide in the atmosphere has exceeded 417 ppm, and carbon dioxide emissions are increasing year by year. As a main component of greenhouse gases, the increase in CO₂ emissions exacerbates global warming, thus accelerating the melting of a large amount of glacier, increasing sea level, and causing adverse changes in the ecological environment. Therefore, it is increasingly important to delay global warming by carbon neutralization technologies such as CO₂ emission reduction. China announced to the world the goal of achieving "peak carbon dioxide emissions" in 2030 and "carbon neutrality" in 2060 at the United Nations General Assembly in September 2020.

A carbon capture, utilization and storage (CCUS) technology is considered to be a most economical and feasible method to reduce greenhouse gas emissions and slow down global warming. As a deep emission reduction technology, the CCUS technology is relatively effective and may save transportation costs by directly capturing industrial fixed emission sources, such as thermal power, steel, cement, chemical industry and the like. However, the energy consumption of carbon capture technology varies greatly due to differences in carbon dioxide concentration and capture modes of different emission sources. At present, main carbon capture technologies are divided into a pre-combustion capture, an oxygen-enriched combustion capture and a post-combustion capture. In the pre-combustion capture, carbon-containing components in fuel are converted into water gas, and then carbon dioxide is separated therefrom, which is mostly used for integrated coal gasification combined cycle power stations. In the oxygen-enriched combustion capture, pure oxygen is separated from the air and passed into a combustion system, and is supplemented by a flue gas circulation, and the carbon dioxide captured by this technology is high in purity, but a total system investment is relatively high. In the post-combustion capture, carbon dioxide is separated from flue gas, which is relatively high in energy consumption. In addition, the above-mentioned carbon dioxide capture methods are all centralized capture technologies for CO₂ emissions from industrial centralized sources. However, in fact, about 30 to 50% of global CO₂ per year comes from distributed emission sources, such as transportation industry, residential building thermal energy, and small factories, etc.

A direct air capture (DAC) carbon dioxide technology is an important CCUS technology and is an indispensable negative emission technology, which is different from a conventional carbon dioxide capture technology. A DAC process may be used as an effective compensation for a centralized capture technology. This technology may remove CO₂ from ambient air, thus effectively reducing the amount of carbon dioxide in the air. The DAC process generally consists of an air capture module, an absorbent or adsorbent regeneration module, and a CO₂ storage module. In the air capture module, CO₂ in the air is mostly captured by devices such as an induced draft fan at first, and then CO₂ is absorbed by solid absorption materials or liquid absorption materials. The absorbent or adsorbent regeneration module is mainly used for regenerating materials by high temperature desorption and other methods. The CO₂ storage module is mainly used for feeding collected CO₂ into a storage tank for storage via a compressor. The DAC process may capture "decentralized" emission sources, such as compact fossil fuel combustion devices and vehicles. More importantly, it may maintain and truly reduce the concentration of carbon dioxide in the atmosphere. Therefore, the DAC process, as a bottoming technology to achieve the goal of "double carbon", directly removes carbon dioxide from the air and performs permanent conversion and storage. The development of its technology is particularly important. At present, an international direct air carbon capture process mainly adopts an alkaline solution and an amine adsorbent. However, an existing alkaline solution is relatively high in energy consumption in the regeneration process, which is not conducive to engineering utilization. An existing amine adsorbent has a relatively low adsorption capacity, small overall treatment capacity and poor stability in a process of absorption-regeneration cycle in engineering.

### SUMMARY

The present application aims to solve, at least to a certain extent, one of the technical problems in the related art. Therefore, an embodiment of the present application provides a direct air capture method of carbon dioxide. The method includes following steps:
(1) an absorption stage: absorbing and capturing carbon dioxide in air by an adsorbent until it is saturated;
(2) a desorption and regeneration stage: heating the adsorbent to 105 to 110°C in a high vacuum state to desorb and regenerate the adsorbent and release pure carbon dioxide gas; and
(3) a cooling stage: cooling the adsorbent to a room temperature by using the air, and then performing a next absorption-desorption and regeneration cycle.

The adsorbent is prepared by a method including following steps: mixing pulverized coal with a potassium carbonate solution, followed by an activation treatment to generate a porous carbon material; mixing the porous carbon material with carbon nanotubes and an ionic liquid, followed by a carbonization treatment to obtain the adsorbent.

According to the direct air capture method of carbon dioxide provided in the embodiment of the present application, the carbon dioxide in the air is absorbed and captured by a carbon dioxide adsorbent until it is saturated. Then, the adsorbent is desorbed and regenerated in the high vacuum state, thus releasing the pure carbon dioxide gas. Finally, the adsorbent is cooled by using the air, so that it is convenient for the next absorption-desorption and regeneration cycle. The method has advantages of a simple process, low energy consumption and a low cost. On the other hand, in the embodiment of the present application, the pulverized coal is mixed with the potassium carbonate solution, followed by the activation treatment to prepare the porous carbon material. The porous carbon material is evenly mixed with the carbon nanotubes and the ionic liquid, followed by the carbonization treatment to prepare the adsorbent. In this preparation method, the pulverized coal is used as a carbon source. The carbon source has wide adaptability and a low cost. Moreover, the preparation method has a simple process and is easy to operate. A prepared absorbent has a better absorption effect on carbon dioxide.

In some embodiments, in step (2), the heating is performed by a Joule effect caused by current.

In some embodiments, in step (2), a pressure in the high vacuum state is 1.33×10⁻¹ to 1.33×10⁻⁶ Pa.

In some embodiments, in step (1), the carbon dioxide in the air is absorbed by the adsorbent at a temperature of 20 to 30°C and a pressure of 1 to 1.5atm (1 to 1.5 standard atmospheres).

In some embodiments, in step (1), a flow rate of the air is 10,000 to 12,000 m³/h.

In some embodiments, in the method for preparing the adsorbent, a mesh number of the pulverized coal is 60 to 80 mesh. A mass fraction of the potassium carbonate solution is 5 to 8 wt.%. A mass ratio of the pulverized coal to the potassium carbonate solution is 1:25 to 1:30. A stirring and mixing time is 12 to 24h.

In some embodiments, in the method for preparing the adsorbent, the activation treatment is performed at a temperature of 400 to 600°C, preferably 400°C for an activation time of 3 to 5h, preferably 3h. The activation treatment is performed under protection of an inert gas (such as argon).

In some embodiments, in the method for preparing the adsorbent, cations in the ionic liquid are one or a combination of two or more of: quaternary ammonium salt ions, quaternary phosphonium salt ions, imidazole ions, pyridine ions, pyrrole ions and piperidine ions. Anions in the ionic liquid are one or a combination of two or more of: chloride ions ([Cl]⁻), bromide ions ([Br]⁻), tetrafluoroborate ions ([BF₄]⁻), hexafluorophosphate ions ([BF₆]⁻), chloroaluminate ions ([AlCl₃]⁻) and bis(perfluoromethylsulfonyl)imide ions ([Tf₂N]⁻).

In some embodiments, in the method for preparing the adsorbent, a mass ratio of the porous carbon material to the carbon nanotubes is (1 to 3): (2 to 8). A concentration of the ionic liquid is 10 to 15mmol/L. A mass-volume ratio of the porous carbon material to the ionic liquid is (6 to 10) g: (100 to 150) ml.

In some embodiments, in the method for preparing the adsorbent, the carbonization treatment is performed at a temperature of 400 to 600°C, preferably 400°C for a carbonization time of 6 to 12h, preferably 6 to 8h. The carbonization treatment is performed under protection of an inert gas (such as argon).

Advantages and beneficial effects of the present application are as follows:
(1) According to the direct air capture method of carbon dioxide provided in the embodiments of the present application, the carbon dioxide in the air is directly absorbed and captured by the carbon dioxide adsorbent. Then, the adsorbent is desorbed and regenerated in the high vacuum state. Finally, the adsorbent is cooled by using the air to perform the next absorption-desorption and regeneration cycle. The capture method has a simple process, and an adopted absorbent has a better absorption effect on carbon dioxide. In addition, the process does not need excessive regeneration energy consumption, which may save energy and has a low cost.
(2) According to the direct air capture method of carbon dioxide provided in the embodiments of the present application, the pulverized coal is mixed with the potassium carbonate solution, followed by the activation treatment to prepare the porous carbon material. The porous carbon material is evenly mixed with the carbon nanotubes and the ionic liquid, followed by the carbonization treatment to prepare the adsorbent. In this preparation method, the pulverized coal is used as the carbon source, raw materials are wide in source and low in cost. Moreover, the preparation method has a simple process and is easy to operate, and the prepared absorbent has a better absorption effect on carbon dioxide.

### BRIEF DESCRIPTION OF THE DRAWINGS

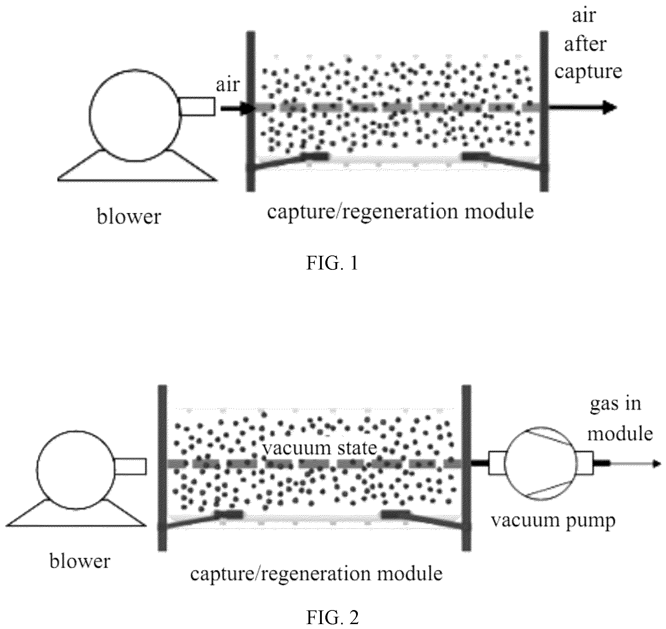

FIG. 1 is a schematic diagram of an absorption stage in a normal operating state.
FIG. 2 is a schematic diagram of an absorption stage in an end state.

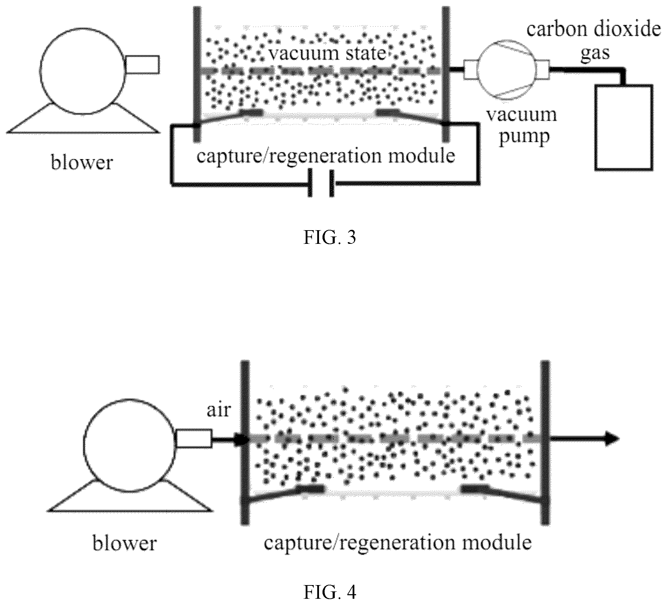

FIG. 3 is a schematic diagram of a desorption and regeneration stage in a desorption state under heating in vacuum.
FIG. 4 is a schematic diagram of a cooling stage in a normal operating state.

### DETAILED DESCRIPTION

Embodiments of the present application are described in detail below. The embodiments are illustrated and are intended to explain the present application and cannot be construed as limiting the present application.

An embodiment of the present application provides a direct air capture method of carbon dioxide. The method includes following steps:
(1) an absorption stage: air is blown into an air carbon capture/regeneration module by a blower. Carbon dioxide gas in the air is absorbed by an adsorbent, and the rest of the gas is directly discharged. After the absorption of the adsorbent is saturated, the blower stops operation, air is not fed to the air carbon capture/regeneration module, then the air carbon capture/regeneration module is vacuumized in a short period of time, and the air remaining in the air carbon capture/regeneration module is pumped out to be ready to enter a regeneration stage.
(2) a desorption and regeneration stage: the air carbon capture/regeneration module is in a high vacuum state after a vacuumizing step at the end of the previous absorption stage. In the high vacuum state, the adsorbent is heated to 105 to 110°C, so that the adsorbent is desorbed and regenerated, and pure carbon dioxide gas is desorbed and transported to a gas cylinder via a vacuum pump. The carbon dioxide gas stored in the gas cylinder may be used for greenhouse gas fertilizers or fuels synthesis.
(3) a cooling stage: after the end of the regeneration stage, an air inlet valve of the air carbon capture/regeneration module is opened, and air enters the module again, so that the adsorbent is cooled to a room temperature, and a pressure is restore to an initial state. A carbon dioxide absorption stage may be started again, and a new absorption-desorption and regeneration cycle may be started. In this process, the air is used as a cooling medium to cool the adsorbent, and no additional cooling medium is needed, which may save costs, and at the same time, a process of re-introducing air for a new carbon dioxide absorption stage is omitted, thus saving time.

The adsorbent is prepared by a method including following steps: mixing pulverized coal with a potassium carbonate solution, followed by an activation treatment to generate a porous carbon material; mixing the porous carbon material with carbon nanotubes and an ionic liquid, followed by a carbonization treatment to obtain the adsorbent.

According to the direct air capture method of carbon dioxide provided in the embodiment of the present application, the carbon dioxide in the air is absorbed and captured by a carbon dioxide adsorbent until it is saturated. Then, the adsorbent is desorbed and regenerated in the high vacuum state, thus releasing the pure carbon dioxide gas. Finally, the adsorbent is cooled by using the air, so that it is convenient for the next absorption-desorption and regeneration cycle. The method has advantages of a simple process, low energy consumption and a low cost. On the other hand, in the embodiment of the present application, the pulverized coal is mixed with the potassium carbonate solution, followed by the activation treatment to prepare the porous carbon material. The porous carbon material is evenly mixed with the carbon nanotubes and the ionic liquid, followed by the carbonization treatment to prepare the adsorbent. In this preparation method, the pulverized coal is used as a carbon source. The carbon source has wide adaptability and a low cost. Moreover, the preparation method has a simple process and is easy to operate. A prepared absorbent has a better absorption effect on carbon dioxide.

In some embodiments, in step (2), the heating is performed by a Joule effect caused by current.

In some embodiments, in step (2), a pressure in the high vacuum state is 1.33×10⁻¹ to 1.33×10⁻⁶ Pa, for example, it may be 1.33×10⁻¹Pa, 1.33×10⁻²Pa, 1.33×10⁻³Pa, 1×10⁻³Pa, 1.33×10⁻⁴Pa, 1×10⁻⁵Pa, 1×10⁻⁶Pa, 1.33×10⁻⁶Pa, etc.

In some embodiments, in step (1), the carbon dioxide in the air is absorbed by the adsorbent at a temperature of 20 to 30°C and a pressure of 1 to 1.5atm (1 to 1.5 standard atmospheres).

In some embodiments, in step (1), a flow rate of the air is 10,000 to 12,000 m³/h, for example, it may be 10,000 m³/h, 10,500 m³/h, 11,000 m³/h, 11,800 m³/h, 12,000 m³/h, etc.

In some embodiments, in the method for preparing the adsorbent, a mesh number of the pulverized coal is 60 to 80 mesh, for example, it may be 60 mesh, 65 mesh, 70 mesh, 75 mesh, 80 mesh, etc. A mass fraction of the potassium carbonate solution is 5 to 8 wt.%, for example, it may be 5wt.%, 6wt.%, 6.5wt.%, 7wt.%, 8 wt.%, etc. A mass ratio of the pulverized coal to the potassium carbonate solution is 1:25 to 1:30, for example, it may be 1:25, 1:26, 1:27, 1:28, 1:30, etc. A stirring and mixing time is 12 to 24h, for example, it may be 12h, 15h, 18h, 20h, 22h, 24h, etc.

In some embodiments, in the method for preparing the adsorbent, the activation treatment is performed at a temperature of 400 to 600°C, such as 400°C, 500°C, 550°C, 600°C for an activation time of 3 to 5h, such as 3h, 3.5h, 4h, 5h, etc. The activation treatment is performed under protection of an inert gas (such as argon).

Preferably, the activation treatment is performed at a temperature of 400°C for an activation time of 3h.

In some embodiments, in the method for preparing the adsorbent, cations in the ionic liquid are one or a combination of two or more of: quaternary ammonium salt ions, quaternary phosphonium salt ions, imidazole ions, pyridine ions, pyrrole ions and piperidine ions. Anions in the ionic liquid are one or a combination of two or more of: chloride ions ([Cl]⁻), bromide ions ([Br]⁻), tetrafluoroborate ions ([BF₄]⁻), hexafluorophosphate ions ([BF₆]⁻), chloroaluminate ions ([AlCl₃]⁻) and bis(perfluoromethylsulfonyl)imide ions ([Tf₂N]⁻).

In some embodiments, in the method for preparing the adsorbent, a mass ratio of the porous carbon material to the carbon nanotubes is (1 to 3): (2 to 8), for example, it may be 1:2, 1:4, 1:7, 2:5, 3:8, etc.

In some embodiments, in the method for preparing the adsorbent, a concentration of the ionic liquid is 10 to 15mmol/L, for example, it may be 10mmol/L, 11mmol/L, 12mmol/L, 12.5mmol/L, 13mmol/L, 14mmol/L, 14.2mmol/L, 15mmol/L, etc.

In some embodiments, a mass-volume ratio of the porous carbon material to the ionic liquid is (6 to 10) g: (100 to 150) ml, for example, it may be 6g:100ml, 6g:120ml, 7g:100ml, 7g:150ml, 7.5g:150ml, 8g:130ml, 9g:140ml, 10g:150ml, etc.

In some embodiments, in the method for preparing the adsorbent, the carbonization treatment is performed at a temperature of 400 to 600°C, such as 400°C, 500°C, 550°C, 600°C for a carbonization time of 6 to 12h, such as 6h, 6.5h, 7h, 8h, 9h, 9.5h, 10h, 11h, 12h, etc. The carbonization treatment is performed under protection of an inert gas (such as argon).

Preferably, the carbonization treatment is performed at a temperature of 400°C for a carbonization time of 6 to 8h, such as 6h, 6.5h, 7h, 8h, etc.

The direct air capture method of carbon dioxide provided in the present application will be described in further detail below taken in conjunction with specific examples.

### Example 1

On the one hand, this example provides an adsorbent. The adsorbent is prepared by a method including following steps.

In S1, 10g of dry pulverized coal was evenly dispersed in 250ml of 5wt.% potassium carbonate solution, stirred and mixed for 24h to obtain a mixed solution. Then, the mixed solution was placed in a tube furnace, heated to 400°C under protection of an argon atmosphere, and activated for 3h to obtain a porous carbon material.

In S2, 6g of the porous carbon material prepared in the above step S1 was weighed, evenly mixed with 12g of carbon nanotubes and 100ml of 10mmol/L amino-azole-based dual functionalized ionic liquid ([DETAH][Im]), and then carbonized at 400°C for 6h in an argon atmosphere to prepare the adsorbent.

The adsorbent prepared above was used to absorb carbon dioxide.

On the other hand, this example further provides a direct air capture method of carbon dioxide, including following steps.
(1) an absorption stage: air is blown into an air carbon capture/regeneration module by a blower. Carbon dioxide gas in the air is absorbed by the above-mentioned adsorbent, and the rest of the gas is directly discharged. After the absorption of the adsorbent is saturated, the blower stops operation, air is not fed to the air carbon capture/regeneration module, then the air carbon capture/regeneration module is vacuumized in a short period of time, and the air remaining in the air carbon capture/regeneration module is pumped out to be ready to enter a regeneration stage.
(2) a desorption and regeneration stage: the air carbon capture/regeneration module is in a high vacuum state after a vacuumizing step at the end of the previous absorption stage. In the high vacuum state (10⁻⁵Pa of pressure), the adsorbent is heated to 105 to 110°C by using a Joule effect of current, so that the desorption and regeneration of the adsorbent is accelerated, and pure carbon dioxide gas is desorbed and transported to a gas cylinder via a vacuum pump. The carbon dioxide gas stored in the gas cylinder may be used for greenhouse gas fertilizers or fuel synthesis.
(3) a cooling stage: after the end of the regeneration stage, an air inlet valve of the air carbon capture/regeneration module is opened, and air enters the module again, so that the adsorbent is cooled to a room temperature, and a pressure is restore to an initial state. A carbon dioxide absorption stage may be started again, and a new absorption-desorption and regeneration cycle may be started.

The adsorbent in this example may achieve a high absorption load of 3.2mmol/g of carbon dioxide in a state of normal temperature and one atmospheric pressure, and has a better absorption effect.

### Example 2

On the one hand, this example provides an adsorbent. The adsorbent is prepared by a method including following steps.

In S1, 10g of dry pulverized coal was evenly dispersed in 250ml of 5wt.% potassium carbonate solution, stirred and mixed for 24h to obtain a mixed solution. Then, the mixed solution was placed in a tube furnace, heated to 400°C under protection of an argon atmosphere, and activated for 3h to obtain a porous carbon material.

In S2, 6g of the porous carbon material prepared in the above step S1 was weighed, evenly mixed with 12g of carbon nanotubes and 100ml of 15mmol/L amino-azole-based dual functionalized ionic liquid ([DETAH][Im]), and then carbonized at 400°C for 6h in an argon atmosphere to prepare the adsorbent.

The adsorbent prepared above was used to absorb carbon dioxide.

On the other hand, this example further provides a direct air capture method of carbon dioxide, including following steps.
(1) an absorption stage: air is blown into an air carbon capture/regeneration module by a blower. Carbon dioxide gas in the air is absorbed by the above-mentioned adsorbent, and the rest of the gas is directly discharged. After the absorption of the adsorbent is saturated, the blower stops operation, air is not fed to the air carbon capture/regeneration module, then the air carbon capture/regeneration module is vacuumized in a short period of time, and the air remaining in the air carbon capture/regeneration module is pumped out to be ready to enter a regeneration stage.
(2) a desorption and regeneration stage: the air carbon capture/regeneration module is in a high vacuum state after a vacuumizing step at the end of the previous absorption stage. In the high vacuum state (10⁻⁵Pa of pressure), the adsorbent is heated to 105 to 110°C by using a Joule effect of current, so that the desorption and regeneration of the adsorbent is accelerated, and pure carbon dioxide gas is desorbed and transported to a gas cylinder via a vacuum pump. The carbon dioxide gas stored in the gas cylinder may be used for greenhouse gas fertilizers or fuel synthesis.
(3) a cooling stage: after the end of the regeneration stage, an air inlet valve of the air carbon capture/regeneration module is opened, and air enters the module again, so that the adsorbent is cooled to a room temperature, and a pressure is restore to an initial state. A carbon dioxide absorption stage may be started again, and a new absorption-desorption and regeneration cycle may be started.

The adsorbent in this example may achieve a high absorption load of 3.5mmol/g of carbon dioxide in a state of normal temperature and one atmospheric pressure, and has a better absorption effect.

### Example 3

On the one hand, this example provides an adsorbent. The adsorbent is prepared by a method including following steps.

In S1, 10g of dry pulverized coal was evenly dispersed in 250ml of 5wt.% potassium carbonate solution, stirred and mixed for 24h to obtain a mixed solution. Then, the mixed solution was placed in a tube furnace, heated to 400°C under protection of an argon atmosphere, and activated for 3h to obtain a porous carbon material.

In S2, 7g of the porous carbon material prepared in the above step S1 was weighed, evenly mixed with 12g of carbon nanotubes and 150ml of 15mmol/L amino-azole-based dual functionalized ionic liquid ([DETAH][Im]), and then carbonized at 400°C for 6h in an argon atmosphere to prepare the adsorbent.

The adsorbent prepared above was used to absorb carbon dioxide.

On the other hand, this example further provides a direct air capture method of carbon dioxide, including following steps.
(1) an absorption stage: air is blown into an air carbon capture/regeneration module by a blower. Carbon dioxide gas in the air is absorbed by the above-mentioned adsorbent, and the rest of the gas is directly discharged. After the absorption of the adsorbent is saturated, the blower stops operation, air is not fed to the air carbon capture/regeneration module, then the air carbon capture/regeneration module is vacuumized in a short period of time, and the air remaining in the air carbon capture/regeneration module is pumped out to be ready to enter a regeneration stage.
(2) a desorption and regeneration stage: the air carbon capture/regeneration module is in a high vacuum state after a vacuumizing step at the end of the previous absorption stage. In the high vacuum state (10⁻⁵Pa of pressure), the adsorbent is heated to 105 to 110°C by using a Joule effect of current, so that the desorption and regeneration of the adsorbent is accelerated, and pure carbon dioxide gas is desorbed and transported to a gas cylinder via a vacuum pump. The carbon dioxide gas stored in the gas cylinder may be used for greenhouse gas fertilizers or fuel synthesis.
(3) a cooling stage: after the end of the regeneration stage, an air inlet valve of the air carbon capture/regeneration module is opened, and air enters the module again, so that the adsorbent is cooled to a room temperature, and a pressure is restore to an initial state. A carbon dioxide absorption stage may be started again, and a new absorption-desorption and regeneration cycle may be started.

The adsorbent in this example may achieve a high absorption load of 3.7mmol/g of carbon dioxide in a state of normal temperature and one atmospheric pressure, and has a better absorption effect.

It may be understood that the air carbon capture/regeneration module in the embodiments of the present application is an air carbon capture module or an air carbon regeneration module. By controlling process parameters such as temperature and pressure, the air carbon capture/regeneration module is an air carbon capture module in the absorption stage, and the air carbon capture/regeneration module is an air carbon regeneration module in the desorption and regeneration stage.

It may be seen from the above-mentioned embodiments that, in the present application, the pulverized coal is mixed with the potassium carbonate solution, followed by the activation treatment to generate the porous carbon material. The porous carbon material is evenly mixed with the carbon nanotubes and the ionic liquid, followed by the carbonization treatment to obtain the adsorbent, which is used to absorb carbon dioxide. The method for preparing the adsorbent is simple and the adsorbent has a better absorption effect on carbon dioxide. In addition, according to the capture method provided in the present application, the carbon dioxide in the air is directly captured and absorbed, and the adsorbent is desorbed and regenerated in the high vacuum state. The capture method has a simple process, is easy to operate, has a low cost, does not need excessive regeneration energy consumption, and may save energy.

In the present application, terms "an embodiment," "some embodiments," "an example," "a specific example," or "some examples," mean that a particular feature, structure, material, or characteristic described in connection with the embodiment or example is included in at least one embodiment or example of the present application. The schematic expressions of the above-mentioned terms throughout this specification are not necessarily referring to the same embodiment or example. Moreover, the particular features, structures, materials, or characteristics described may be combined in any suitable manner in one or more embodiments or examples. In addition, those skilled in the art may combine the different embodiments or examples and features of different embodiments or examples described in this specification without being mutually inconsistent.

Although the embodiments of the present application have been shown and described above, it is to be understood that the above-mentioned embodiments are illustrative and cannot be construed as limitations of the present application, and changes, modifications, substitutions and variations made to the above-mentioned embodiments by those skilled in the art are within the scope of the present application.

## Claims

1. A direct air capture method of carbon dioxide, comprising following steps:
(1) an absorption stage: absorbing and capturing carbon dioxide in air by an adsorbent until it is saturated;
(2) a desorption and regeneration stage: heating the adsorbent to 105 to 110°C in a high vacuum state to desorb and regenerate the adsorbent and release pure carbon dioxide gas; and
(3) a cooling stage: cooling the adsorbent to a room temperature by using the air, and then performing a next absorption-desorption and regeneration cycle;
wherein the adsorbent is prepared by a method comprising following steps: mixing pulverized coal with a potassium carbonate solution, followed by an activation treatment to generate a porous carbon material; mixing the porous carbon material with carbon nanotubes and an ionic liquid, followed by a carbonization treatment to obtain the adsorbent.

2. The direct air capture method of carbon dioxide of claim 1, wherein in step (2), the heating is performed by a Joule effect caused by current.

3. The direct air capture method of carbon dioxide of claim 1, wherein in step (2), a pressure in the high vacuum state is 1.33×10⁻¹ to 1.33×10⁻⁶ Pa.

4. The direct air capture method of carbon dioxide of claim 1, wherein in step (1), the carbon dioxide in the air is absorbed by the adsorbent at a temperature of 20 to 30°C and a pressure of 1 to 1.5atm.

5. The direct air capture method of carbon dioxide of claim 1, wherein in step (1), a flow rate of the air is 10,000 to 12,000 m³/h.

6. The direct air capture method of carbon dioxide of claim 1, wherein in the method for preparing the adsorbent, a mesh number of the pulverized coal is 60 to 80 mesh; a mass fraction of the potassium carbonate solution is 5 to 8 wt.%; a mass ratio of the pulverized coal to the potassium carbonate solution is 1:25 to 1:30; a stirring and mixing time is 12 to 24h.

7. The direct air capture method of carbon dioxide of claim 1, wherein in the method for preparing the adsorbent, the activation treatment is performed at a temperature of 400 to 600°C for an activation time of 3 to 5h.

8. The direct air capture method of carbon dioxide of claim 1, wherein in the method for preparing the adsorbent, cations in the ionic liquid are one or a combination of two or more of: quaternary ammonium salt ions, quaternary phosphonium salt ions, imidazole ions, pyridine ions, pyrrole ions and piperidine ions; anions in the ionic liquid are one or a combination of two or more of: chloride ions, bromide ions, tetrafluoroborate ions, hexafluorophosphate ions, chloroaluminate ions and bis(perfluoromethylsulfonyl)imide ions.

9. The direct air capture method of carbon dioxide of claim 1 or 8, wherein in the method for preparing the adsorbent, a mass ratio of the porous carbon material to the carbon nanotubes is (1 to 3): (2 to 8); a concentration of the ionic liquid is 10 to 15mmol/L; a mass-volume ratio of the porous carbon material to the ionic liquid is (6 to 10) g: (100 to 150) ml.

10. The direct air capture method of carbon dioxide of claim 1, wherein in the method for preparing the adsorbent, the carbonization treatment is performed at a temperature of 400 to 600°C for a carbonization time of 6 to 12h.
